# EUROPEAN PATENT SPECIFICATION

(11) **EP 3 373 100 B1**
(45) Date of publication and mention of the grant of the patent: **19.08.2020**
(21) Application number: 18160428.1
(22) Date of filing: 07.03.2018
(51) Int. Cl.: G05D 23/13

(54) **WATER TREATMENT SYSTEM**
WASSERBEHANDLUNGSSYSTEM
SYSTÈME DE TRAITEMENT DES EAUX

(30) Priority: 09.03.2017 DE 102017105051
(43) Date of publication of application: 12.09.2018
(73) Proprietor: ORAS OY, 26100 Rauma (FI)
(72) Inventor: Normiala, Johanna, 26200 Rauma (FI)
(74) Representative: Ostertag & Partner Patentanwälte mbB

(56) References cited:
- EP-A1- 2 615 516
- EP-A2- 2 008 635
- AU-A1- 2014 202 801
- GB-A- 742 585
- US-A- 5 215 251
- US-A- 5 294 045
- US-A1- 2004 193 326

## Description

The invention relates to a water treatment system for controlling a water temperature at a treatment outlet of a sanitary fitting.

A hydrotherapy treatment with different water temperatures may be useful to achieve a health related effect on a user and/or patient. For example, hot water dilates blood vessels, increasing blood flow to the skin and muscles. This improves circulation and the immune system. Waste products may be effectively removed, while nutrients and oxygen are carried around the body. Cold water stimulates the blood vessels near the skin surface to constrict, sending blood away from the skin and towards the internal organs, improving their functioning and reducing inflammation. Contrast bath therapy is an example of a generally known treatment method with different water temperatures.

In EP 2 008 635 A2 there is shown a computer-controlled hydrotherapy system according to the preamble of Claim 1. A disadvantage of the device shown in EP 2 008 635 A2 is that it is unclear how long it takes to reach a certain temperature at one of the plurality of treatment outlets because of the heat capacity of the single parts of the system. Therefore, neither the user nor the installer of the system can be sure that the desired temperature at the treatment outlet is actually reached before the applied temperature control sequence is again changing the treatment temperature of the treatment water.

US 5,215,251 A describes a liquids systems for the use in large commercial bakeries, where the temperature sensor used will produce an output which does not exactly track the actual temperature of the water because its response time is not fast enough to follow that temperature change. Therefore, a time delay is required in order to avoid an incorrect adjustment in valve setting.

The object of the present invention is to facilitate a hydrotherapy treatment that is easy, comfortable and safe to use in a in a bath, shower or healthcare environment.

This object is achieved by a water treatment system according to Claim 1.

The inventors have realized that it is thus possible to provide water with an intermediate water temperature at a treatment outlet even if the sanitary fitting of the water treatment system comprises two feed lines with given water temperatures and discrete valves, namely valves which may switch the flow fully open or fully closed without intermediate openings known from proportional valves. Electronically operated valves particularly suitable for a pulsed activation are e.g. solenoid valves, in particular bi-stable valves.

For this purposes, the water treatment system comprises in addition to the sanitary fitting a controller configured to pulse the electronically operated valves. Because of the heat capacity of various parts of the sanitary fitting and in particular the length of feed lines connecting the treatment outlet, the water temperature at the treatment outlet changes only delayed with respect to a temperature change initiated by a pulse of a valve. By taking into account a given latency for the water temperature change at the treatment outlet with respect to a pulse, the controller may set an intermediate temperature by varying the pulse durations of the valves. Advantageously, the controller enables a user to set a latency parameter representing the given latency, in particular beforehand during installation of the water treatment system.

Therefore, the invention provides a comfortable and easy to use water treatment system with temperatures that may change intermittently using appliances and control means that are suitable be fitted into a shower and/or bath unit.

Advantageously, the first discrete valve and the second discrete valve are operated alternatingly such that water is fed either from the first feed line or from the second feed line.

Advantageously, the controller is configured to change the water temperature at the treatment outlet according to at least one pulse sequence, wherein the pulse sequence comprises one or a plurality of pulse periods, comprising a first pulse of a first duration associated with the first water temperature and a second pulse of a second duration associated with the second water temperature. This allows for a pulse width modulation in order to control the intermediate water temperature. In particular, the pulse durations which provide an intermediate water temperature are shorter than 3 seconds, in particular shorter than 2 seconds, in particular shorter than 0,5 seconds. These are pulse durations which take into account usual latencies of water treatment systems.

Advantageously, the at least one pulse sequence comprises at least one pulse period, wherein the duration of the first pulse is shorter than the duration of the second pulse. By this the intermediate water temperature gets closer to the first water temperature than to the second water temperature.

Advantageously, the pulse sequence comprises a fade-in sub-sequence comprising a first pulse period and a subsequent (or alternatively any of the following) second pulse period, wherein the duration of the first pulse of the first pulse period is shorter than the duration of the first pulse of the second pulse period. Thereby, a pleasant fade-in effect into a contrast bath may be achieved. According to this embodiment a build-up phase may be provided allowing the user's and/or patient's body to familiarize with the intermittently changing water temperatures. Thus shock effects, for example a cold water shock, may be avoided.

Advantageously, the pulse sequence comprises at least one pulse period, wherein the duration of the first pulse is longer than the duration of the second pulse.

Advantageously, the pulse sequence comprises a fade-out sub-sequence comprising a first pulse period and a subsequent (or alternatively any of the following) second pulse period, wherein the duration of the first pulse of the first pulse period is longer than the duration of the first pulse of the second pulse period. Thereby, a pleasant fade-out effect from a contrast bath may be achieved. According to this embodiment a swing-off phase may be provided allowing the user's and/or patient's body to gradually recover.

Advantageously, the pulse sequence comprises at least one pulse period, wherein the duration of the first pulse is equal to the duration of the second pulse. For a contrast bath usually the stress and relax times are of equal duration.

Advantageously, the pulse sequence comprises a sub-sequence comprising a pulse period that is repeated at last two times. A very effective hydrotherapy treatment may be achieved by such repetitive stimulation of the user's and/or patient's body. Advantageously, the pulse periods of such stress and relax time pulses are of longer duration than the fade-in and/or the fade-out sub sequences.

Advantageously, the first water temperature is lower than the second water temperature. Namely, the first water temperature may correspond to the cold water temperature provided by a domestic pipework. However, the second water temperature may correspond to a mixed water temperature set by a mixing valve arranged upstream of the second discrete valve.

Advantageously, the sanitary fitting comprises a cold water inlet and a hot water inlet coupled to a mixing valve having a mixing valve outlet, wherein the first water feedline is a cold water bypass line coupled to the cold water inlet and the first discrete valve is a cold water valve, and wherein the second water feed line is a mixed water line coupled to the mixing valve outlet and the second discrete valve is a mixed water valve. By providing one of the discrete valves with already mixed water from a mixing valve, like a thermostatic mixer or a single-lever mixer, the user may choose his comfortable temperature for the relax pulses. The cold water bypass line triggered by the controller then allows to provide a water treatment using cold water pulses to the user. In particular in combination with the fade-in and fade-out sub-sequences the water treatment system allows a very comfortable adaption to a treatment session by "swinging in" from the mixed water temperature to the cold temperature.

These and other objects, features and advantages of the present invention will be better understood when consideration is given to the following description in connection with the accompanying schematic drawings wherein:
- Figure 1: illustrates a schematic drawing of a water treatment system for controlling a water temperature at a treatment outlet;
- Figure 2: a sanitary fitting the water treatment system in an orthogonal view;
- Figure 3A: illustrates the sanitary fitting of figure 1 in a sectional view along the line A-A from figure 1;
- Figure 3B: illustrates the sanitary fitting of figure 1 in a sectional view along the line B-B from figure 1;
- Figure 4: illustrates a first exemplary pulse sequence in a temperature-time diagram;
- Figure 5: illustrates a second exemplary pulse sequence in a temperature-time diagram;
- Figures 6a, 6b: illustrate a third exemplary pulse sequence in a temperature-time diagram;
- Figure 7: illustrates an alternative fade-in sub-sequence in a temperature-time diagram.

As required, detailed embodiments of the present invention are disclosed herein. However, it is to be understood that the disclosed embodiments are merely exemplary of the invention that may be embodied in various and alternative forms. The figures are provided for illustrative purpose. Therefore the figures may be simplified in certain aspects and are not necessarily to scale. Specific structural and functional details disclosed herein are not to be interpreted as limiting, but merely as a representative basis for teaching one skilled in the art to variously employ the present invention.

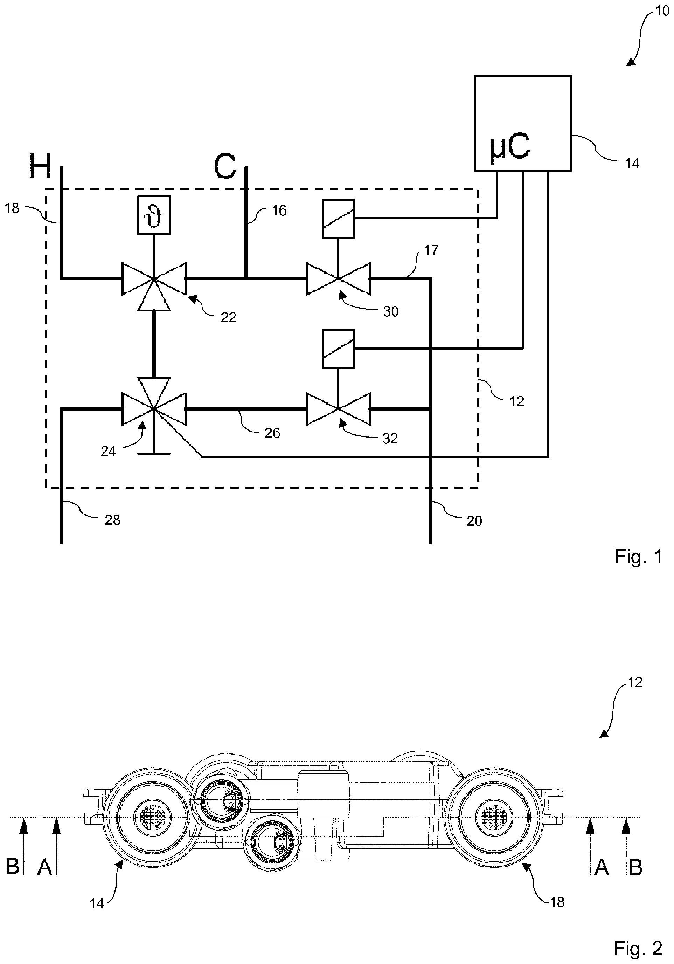

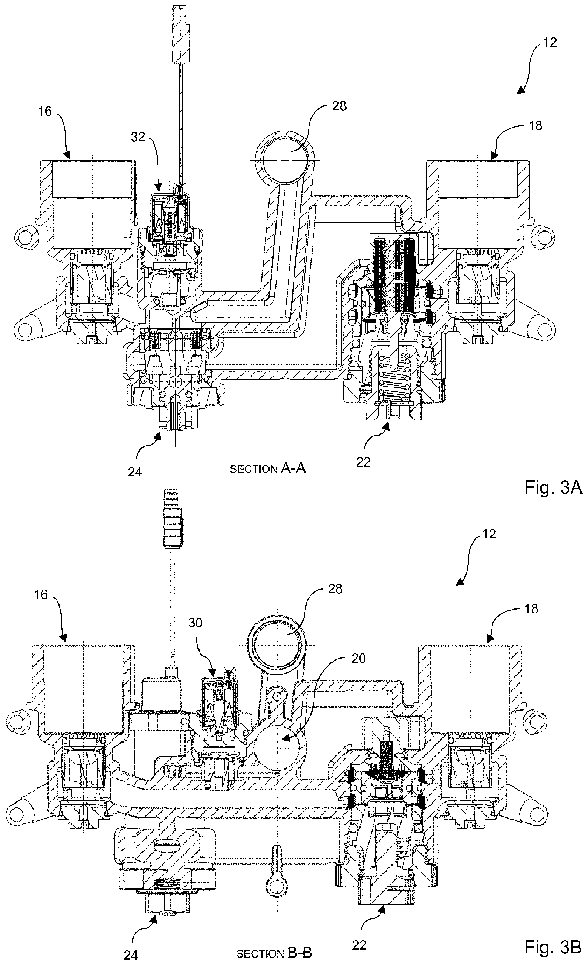

Figure 1 shows schematically a non-limiting example of a water treatment system 10 comprising a sanitary fitting 12 (dashed line) and a controller 14. Figures 2, 3A and 3B show the sanitary fitting 12 in different illustrative views. For the sake of a clearer overview not all elements of the sanitary fitting 12 are labeled with reference numerals.

The sanitary fitting 12 illustrated in figures 1, 2, 3A and 3B may be suitable but not limited for use in any sanitary installation like a bath, shower and/or healthcare environment. The sanitary fitting 12 comprises a cold water inlet 16, a hot water inlet 18 and at least a treatment outlet 20.

The treatment outlet 20 is configured to provide water to a treatment device that may be used for water treatment, e.g. hydrotherapy with different water temperatures. A treatment device that receives water from the treatment outlet 20 may be for example a hand shower, a mounted shower, an arrangement of one or several nozzles, e.g. the nozzles of a tub or the nozzles of a shower arrangement.

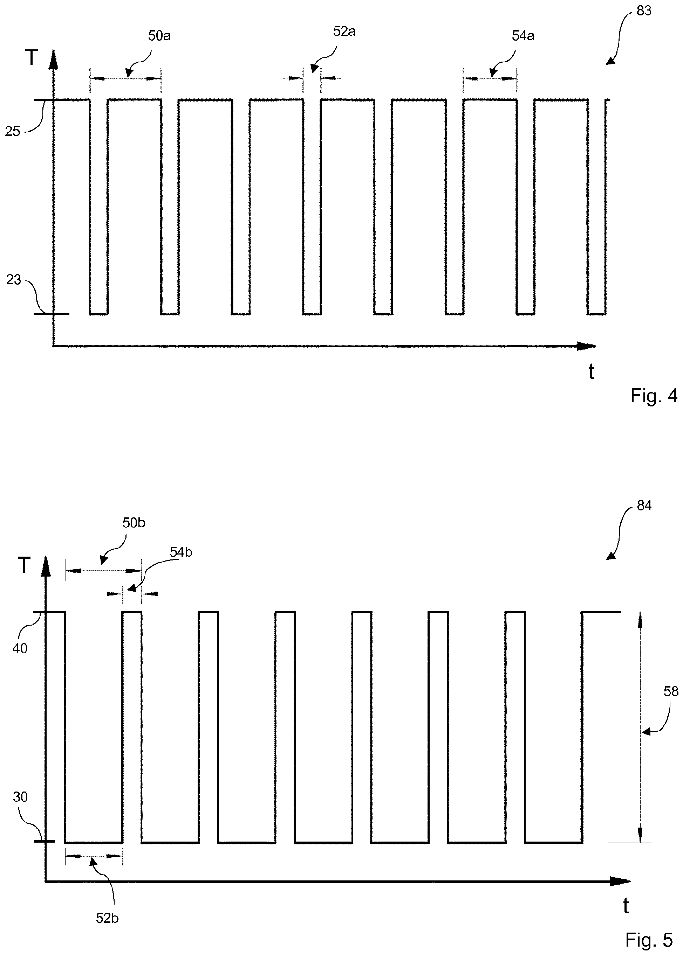

The cold water inlet 16 is arranged to provide cold water to a mixing valve 22. The cold water is provided with a cold water temperature 23 (see also figures 4 to 7). The hot water inlet 18 is arranged to provide hot water with a hot water temperature to the mixing valve 22. The mixing valve 22, e.g. a thermostatic mixer, allows blending the received hot water and cold water to provide mixed water with a mixed water temperature 25 at its output. Therefore, mixed water is water for which the mixed temperature 25 (see also figures 4 to 7) could be adjusted by varying the portions of water from the cold water inlet 16 and from the hot water inlet 18.

As shown in the present embodiment the output of the mixing valve 22 may be coupled to a diverter 24. The diverter 24 may be arranged to receive mixed water from the output of the mixed water valve 24 at its input. The diverter 24 allows controlling the direction of the water received at its input to at least two outputs. In the given example a first output of the diverter 24 can provide mixed water to the treatment outlet 20 via a mixed water line 26. A second output of the diverter 24 can provide water to another outlet 28 of the sanitary fitting 12.

The cold water inlet 16 is also arranged to provide cold water to the treatment outlet 20 via a cold water bypass line 17. A cold water valve 30 is inserted into the cold water bypass line 17 between the cold water inlet 16 and the treatment outlet 20. A mixed water valve 32 is inserted between the mixing valve 22 and the treatment outlet 20, respectively if a diverter 24 is present between the diverter 24 and the treatment outlet 20. The cold water valve 30 and the mixed water valve 32 are electro-mechanically operated valves, for example solenoid valves.

The cold water valve 30 and the mixed water valve 32 may be operated by the controller 14. The controller 14 comprises (as an example and without being limited to) a processor, for example a micro-processor. The processor may be configured to execute computer-program instructions. Such computer-program instructions may include instructions relating to a method for controlling the water temperature at the treatment outlet 20. The programming of the processor may include hard-wired computer-program instructions and/or computer-program instructions in a software format. The controller may control the water temperature at the treatment outlet 20 by operating the cold water valve 30 and/or the mixed water valve 32.

Figures 4 to 7 refer to non-limiting examples of sequences for controlling the water temperature T at the treatment outlet 20 (see for example figure 2B). A sequence may be programmed in the format of computer-program instructions. During a hydrotherapy session the controller 14 may activate the cold water valve 30 (see for example figure 3B) and the mixed water valve 32 (see for example figure 3A) respectively in accordance with one or a plurality of sequences. According to the exemplary diagrams of figures 4 to 7 the water temperature T changes in the form of pulses, which may correspond to a pulsed activation of the valves, i.e. the cold water valve 30 and the mixed water valve 32 respectively.

Figures 4 to 7 illustrate diagrams of the water temperature T over time t. These diagrams relate to sequences of controlled changes of the water temperature T at the treatment outlet 20. According to the diagrams the temperature T at the treatment outlet 20 varies between a higher temperature, which may correspond to the mixed water temperature 25, and a lower temperature, which may correspond to the cold water temperature 23. When the mixed water valve 32 is open the water temperature T at the treatment outlet 20 corresponds to the mixed water temperature 25. When the cold water valve 30 is open the water temperature T at the treatment outlet 20 corresponds to the cold water temperature 23.

As illustrated in figures 4 to 7 the water temperature T may change according to different pulse sequences 83, 84, 85. Each of the figures illustrates an example of a pulse sequence 83, 84, 85. A pulse sequence 83, 84, 85 comprises one or a plurality of pulse periods 50a, 50b, 50, 55a, 55b, 56a, 56b. A pulse period 50a, 50b, 50, 55a, 55b, 56a, 56b comprises at least a first pulse of a first duration associated with a first water temperature and a second pulse of a second duration associated with a second water temperature. For the sake of a clearer overview only some of the pulses and pulse periods in figures 4 to 7 are labelled with reference numerals. Where a pulse or a pulse period is labeled with a reference numeral, the reference numeral points to the dimension line indicating the duration of the respective pulse or pulse period.

Figure 4 refers to a first exemplary pulse sequence 83. According to this example a first pulse corresponding to a lower temperature, e.g. the cold water temperature 23, may be referred to as stress pulse 52a. A second pulse corresponding to a higher temperature, e.g. the mixed water temperature 25, may be referred to as relax pulse 54a. The exemplary pulse sequence 83 comprises a plurality of pulse periods 50a, wherein a pulse period 50a comprises a stress pulse 52a and a relax pulses 54a. The change of the water temperature T according to the illustrated pulse sequence 83 is achieved by alternating stress pulses 52a and a relax pulses 54a.

According to the exemplary pulse sequence 83 illustrated in figure 4 the duration of a stress pulse 52a is shorter than the duration of a relax pulse 54a. The duration of the stress pulse 52b is reduced compared to a pulse sequence having pulse periods with two pulses of equal duration. The stress perceived by a patient and/or user may thus be decreased. The illustrated sequence may therefore be referred to as reduced cold water stress pulse sequence 83.

Figure 5 refers to a second exemplary pulse sequence 84. According to this example a first pulse corresponding to a lower temperature, e.g. the cold water temperature 23, may be referred to as stress pulse 52b. The difference of the water temperature between the higher temperature and the lower temperature is indicated by the dimension line with reference numeral 58. A second pulse corresponding to a higher temperature, e.g. the mixed water temperature 25, may be referred to as relax pulse 54b. The exemplary pulse sequence 84 comprises a plurality of pulse periods 50b, wherein a pulse period 50b comprises a stress pulse 52b and a relax pulses 54b. The change of the water temperature T according to the illustrated pulse sequence 84 is achieved by alternating stress pulses 52b and a relax pulses 54b.

According to the exemplary pulse sequence 84 illustrated in figure 5 the duration of a stress pulse 52b is longer than the duration of a relax pulse 54b. The duration of the stress pulse 52b is extended compared to a pulse sequence having pulse periods with two pulses of equal duration. The stress perceived by a patient and/or user may thus be increased. The illustrated sequence may therefore be referred to as extended cold water stress pulse sequence 84.

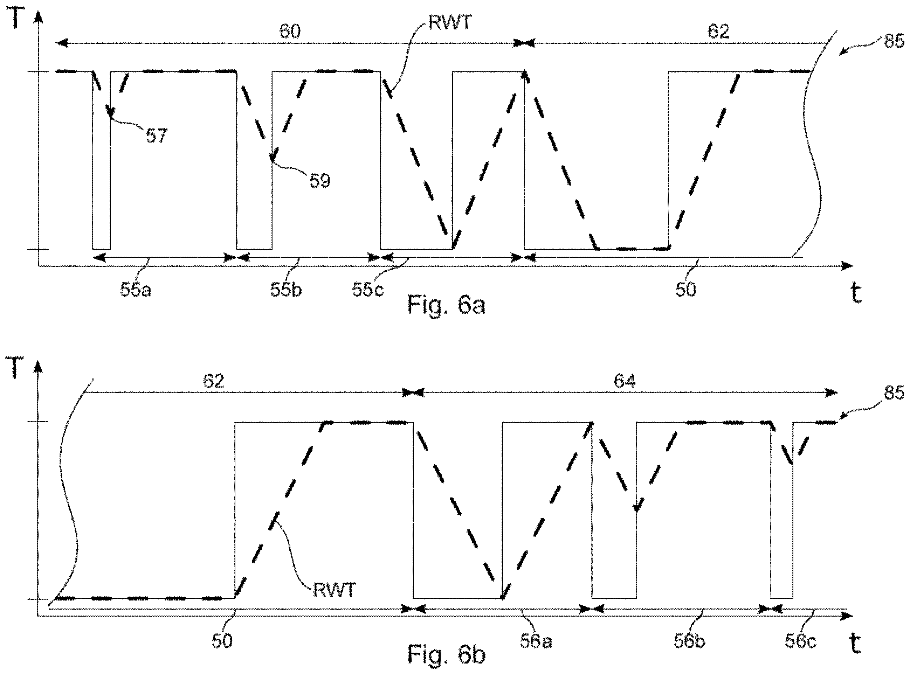

Figures 6a and 6b refer to a further exemplary pulse sequence 85. The diagrams of these figures are similar to the diagrams of figures 4 and 5. However, the time scales are stretched compared to figures 4 and 5. Furthermore, figure 6b is a continuation of Figure 6a with a nonvisible intermediate part in between the figures. In a non-limiting way of example, figure 6b shows a different time scale such that the duration of pulse periods may or may not be equal to one of the pulse periods of figure 6a.

Because of heat capacities included in the sanitary fitting 12 and the lengths of the water feed lines from the cold water valve 30 and the mixed water valve 32 to the treatment outlet 20, the solid lines represent only an idealistic temperature change neglecting any latency of the treatment system. In contrast, a more realistic water temperature T at the treatment outlet 20 is illustrated by a dashed line RWT.

The pulse sequence 85 according to this example comprises a plurality of sub-sequences 60, 62, 64. A sub-sequence 60, 62, 64 comprises a plurality of pulse periods 50, 55a, 55b, 55c, 56a, 56b, 56c. A pulse period 50, 55a, 55b, 55c, 56a, 56b, 56c comprises at least a first pulse of a first duration associated with a first water temperature and a second pulse of a second duration associated with a second water temperature. For the sake of a clearer overview only some of the pulse periods the figures are labelled with reference numerals. Where a pulse period is labeled with a reference numeral, the reference numeral points to the dimension line indicating the duration of the respective pulse period. The reference numeral labeling the pulse sequence 85 points to the dimension line indicating the duration of the pulse sequence 85.

In one embodiment according to figures 6a and 6b a first sub-sequence 60 comprises a first pulse period 55a and a second pulse period 55b, wherein the duration of the first pulse of the first pulse period 55a is shorter than the duration of the first pulse of the second pulse period 55b. As illustrated the water temperatures 57, 59 at the treatment outlet 20 at the end of the first pulses of the two pulse periods 55a, 55b are intermediate between the cold water temperature 23 and the mixed water temperature 25. By extending the duration of the first pulses from one pulse period 55a or 55b to the subsequent pulse period 55b respectively 55c a patient and/or user can adapt more easily to the stress level induced by a lower water temperature. Such smooth transition may enhance the user experience of the water treatment. The described sub-sequence may be referred to as build-up or fade-in sub-sequence 60.

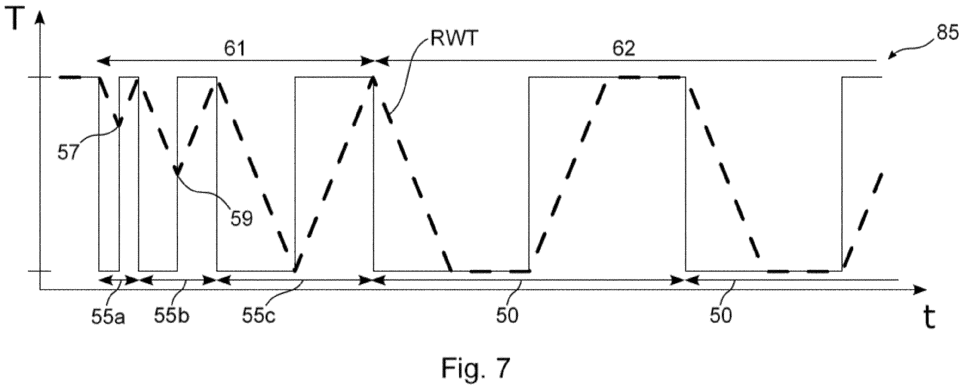

An alternative build-up sub-sequence shown in figure 7 provides a faster fade-in sub-sequence 61, wherein the second pulses of a pulse period are reduced such that the mixed temperature 25 is only achieved for a short moment after an intermediate temperature drop.

In one embodiment according to figures 6a and 6b a second sub-sequence 62 comprises a plurality of repetitive pulse periods 50, wherein the duration of the first pulse of the pulse period 50 is equal to the duration of the second pulse of pulse period 50. As illustrated the water temperature T of the first pulse of such pulse period 50 is lower than the water temperature T of the second pulse of such pulse period 50. In the illustrated example the water temperature T of the first pulse corresponds to the cold water temperature 23 and the water temperature T of the second pulse corresponds to the mixed water temperature 25. The described sub-sequence 62 may be referred to as stress sub-sequence 62. Going from figure 6a to 6b pulse periods 50 of this stress sub-sequence may be repeated once or several times, wherein even the duration of the pulse periods 50 may vary.

In one embodiment according to figure 6b a third sub-sequence 64 comprises a first pulse period 56a and a second pulse period 56b, wherein the duration of the first pulse of the first pulse period 56a is longer than the duration of the first pulse of the second pulse period 56b. By shortening the duration of the first pulses (having the lower water temperature) from one pulse period 56a to the subsequent pulse period 56b a patient and/or user may experience a gradually reduced stress level that is induced by the lower water temperature. Such a smooth transition may enhance the user experience of the water treatment. The described sub-sequence may be referred to as swing-off or fade-out sub-sequence 64.

The sequences illustrated in figures 6a, 6b and 7 may be referred to as a balanced pulse sequence 85, comprising an initial build-up sub-sequence 60 or 61, which is followed by one or several stress sub-sequences 62, and a final swing-off sub-sequence 64. According to the non-limiting example of these figures the highest temperature difference 58 in the balanced pulse sequence 85 corresponds to the difference between the mixed water temperature 40 and the cold water temperature 30.

A build-up sub-sequence 60, 61 may be part of only one or several pulse sequences of a hydrotherapy session. In one embodiment only the first pulse sequence of a hydrotherapy session may comprise a build-up sub-sequence 60, 61. In one alternative embodiment each pulse sequence of a hydrotherapy session may comprise a build-up sub-sequence 60, 61. A build-up sub-sequence 60, 61 may ensure a smooth transition from a recovery sequence without any pulses towards an active pulse sequence 85. A build-up sequence 60, 61 may avoid that the user and/or patient receiving water treatment experiences an unpredictable and/or disconcerting cold water shock.

A swing-off sub-sequence 64 may be part of only one or several pulse sequences of a hydrotherapy session. In one embodiment only the last pulse sequence of a hydrotherapy session may comprise a swing-off sub-sequence 64. In one alternative embodiment each pulse sequence of a hydrotherapy session may comprise a swing-off sub-sequence 64. A swing-off sub-sequence 64 may ensure a smooth transition from an active pulse sequence towards a recovery sequence.

An example embodiment may be described in other words: In a build-up sub-sequence 60, 61, the activation pulse for the cold water pulse begins with a short "on" duration of the cold water valve 30, while the mixed water valve 32 is deactivated with a short "off" duration. These durations are prolonged continuously until the cold water valve 30 is switched to fully open and the mixed water valve 32 is fully closed. For a swing-off sub-sequence 64 the same principle may be applied in analogy in the opposite direction.

A concept that summarizes an underlying aspect of the invention relates to a method for controlling a water temperature T at a treatment outlet 20, wherein the water temperature T at the treatment outlet 20 is changed according to at least one pulse sequence 83, 84, 85, wherein the pulse sequence 83, 84, 85 comprises one or a plurality of pulse periods 50, 50a, 50b, 55a, 55b, 55c, 56a, 56b, 56c comprising a first pulse of a first duration associated with a first water temperature and a second pulse of a second duration associated with a second water temperature, and wherein the water temperature T at the treatment outlet 20 is changed during a pulse period 50, 50a, 50b, 55a, 55b, 55c, 56a, 56b, 56c from the first water temperature of the first pulse to the second water temperature of the second pulse. It is possible to perform a smooth change of the water temperature by varying the durations of the pulses in a pulse sequence 85, preferably at the end and/or the beginning of the pulse sequence 85. Thereby undesired negative effects such as a cold water shock may be avoided or mitigated.

## Claims

1. A water treatment system (10) for controlling a water temperature during a hydrotherapy treatment, wherein the water treatment system (10) comprises
a) a sanitary fitting (12) comprising
- a treatment outlet (20),
- a first water feed line (17)
- including an electronically operated first discrete valve (30) and
- providing water with a first water temperature (23) to the treatment outlet (20),
- a second water feed line (26)
- including an electronically operated second discrete valve (32) and
- providing water with a second water temperature (25) to the same treatment outlet (20), and
b) a controller (14) coupled to the first and second discrete valve (30, 32) of the sanitary fitting (12),
wherein
c) the controller (14) is configured to change the water temperature (RWT) at the treatment outlet (20) to at least one intermediate temperature in between the first and the second water temperature (23, 25),
**characterized in that** the controller (14) is further configured to change the water temperature (RWT)
d) by switching in pulses the first discrete valve (30) and/or the second discrete valve (32) fully open or fully closed without intermediate openings known from proportional valves
e) by varying the pulse durations, and
f) by taking into account a given latency for the temperature change at the treatment outlet (20).

2. The water treatment system according to any of the preceding claims, wherein the controller is configured to change the water temperature at the treatment outlet (20) according to at least one pulse sequence (83, 84, 85), wherein the pulse sequence (83, 84, 85) comprises one or a plurality of pulse periods (50, 50a, 50b, 55a, 55b, 55c, 56a, 56b, 56c), comprising a first pulse of a first duration associated with the first water temperature (23) and a second pulse of a second duration associated with the second water temperature (25).

3. The water treatment system according to claim 2, wherein at least one pulse sequence (83, 84, 85) comprises a plurality of pulse periods (50, 50a, 50b, 55a, 55b, 55c, 56a, 56b, 56c).

4. The water treatment system according to claim 2 or 3, wherein the at least one pulse sequence (83, 84, 85) comprises at least one pulse period (50a, 55a, 55b, 55c, 56a, 56b, 56c), wherein the duration of the first pulse is shorter than the duration of the second pulse.

5. The water treatment system according to any of claims 2 to 4, wherein the pulse sequence (83, 84, 85) comprises a fade-in sub-sequence (60, 61) comprising a first pulse period (55a) and a subsequent second pulse period (55b), wherein the duration of the first pulse of the first pulse period (55a) is shorter than the duration of the first pulse of the second pulse period (55b).

6. The water treatment system according to any of claims 2 to 5, wherein the pulse sequence (83, 84, 85) comprises at least one pulse period (50b), wherein the duration of the first pulse is longer than the duration of the second pulse.

7. The water treatment system according to any of claims 2 to 6, wherein the pulse sequence (83, 84, 85) comprises a fade-out sub-sequence (64) comprising a first pulse period (56a) and a subsequent second pulse period (56b), wherein the duration of the first pulse of the first pulse period (56a) is longer than the duration of the first pulse of the second pulse period (56b).

8. The water treatment system according to any of claims 2 to 7, wherein the pulse sequence (83, 84, 85) comprises at least one pulse period (50), wherein the duration of the first pulse is equal to the duration of the second pulse.

9. The water treatment system according to any of claims 2 to 8, wherein the pulse sequence (83, 84, 85) comprises a sub-sequence (62) comprising a pulse period (50) that is repeated at last two times.

10. The water treatment system according to any of the preceding claims, wherein the first water temperature (23) is lower than the second water temperature (25).

11. The water treatment system according to claim 10, wherein the sanitary fitting (12) comprises a cold water inlet (16) and a hot water inlet (18) coupled to a mixing valve (22) having a mixing valve outlet, wherein the first water feedline is a cold water bypass line (17) coupled to the cold water inlet (16) and the first discrete valve is a cold water valve (30), and wherein the second water feed line is a mixed water line (26) coupled to the mixing valve outlet and the second discrete valve is a mixed water valve (32).

12. The water treatment system according to claim 9 or 10, wherein the sanitary fitting (12) comprises at least one diverter (24) with at least two outputs, wherein the input of the diverter (24) is connected to the outlet of the mixing valve (22)

13. The water treatment system according to claim 11, wherein the diverter (24) allows controlling the direction of the water between the treatment outlet (20) and/or a second outlet (28).

## Patentansprüche

1. Ein Wasserbehandlungssystem (10) zum Steuern einer Wassertemperatur während einer Hydrotherapiebehandlung, wobei das Wasserbehandlungssystem umfasst
a) eine Sanitärarmatur (12), mit
- einem Behandlungsauslass (20),
- einer ersten Wasserzufuhrleitung (17), die
- ein elektronisch betriebenes erstes Diskretventil (30) enthält und die
- dem Behandlungsauslass (20) Wasser mit einer ersten Wassertemperatur (23) bereitstellt,
- einer zweiten Wasserzufuhrleitung (26), die
- ein elektronisch betriebenes zweites Diskretventil enthält (32) und
- demselben Behandlungsauslass (20) Wasser mit einer zweiten Wassertemperatur (25) bereitstellt, und
b) eine Steuerung (14), die mit dem ersten und zweiten Diskretventil (30, 32) der Sanitärarmatur (12) gekoppelt ist,
wobei
c) die Steuerung (14) dazu eingerichtet ist, die Wassertemperatur (RWT) an dem Behandlungsauslass (20) auf zumindest eine Zwischentemperatur zwischen der ersten und der zweiten Wassertemperatur (23, 25) zu verändern,
**dadurch gekennzeichnet, dass** die Steuerung (14) ferner dazu eingerichtet ist, die Wassertemperatur (RWT)
d) durch impulsartiges Schalten des ersten Diskretventils (30) und/oder des zweiten Diskretventils (32) auf vollständig geöffnet oder vollständig geschlossen, ohne die von Proportionalventilen bekannten Zwischenöffnungen
e) durch Variieren der Pulsdauer, und
f) durch Berücksichtigung einer gegebenen Latenz für die Temperaturänderung am Behandlungsauslass (20)
zu verändern.

2. Das Wasserbehandlungssystem gemäß einem der vorhergehenden Ansprüche, wobei die Steuerung dazu eingerichtet ist, die Wassertemperatur an dem Behandlungsauslass (20) entsprechend zumindest einer Pulssequenz (83, 84, 85) zu verändern, wobei die Pulssequenz (83, 84, 85) eine oder eine Mehrzahl von Pulsperioden (50, 50a, 50b, 55a, 55b, 55c, 56a, 56b, 56c) umfasst, die einen der ersten Wassertemperatur (23) zugeordneten ersten Puls einer ersten Dauer und einen einer zweiten Wassertemperatur zugeordneten zweiten Puls einer zweiten Dauer umfasst.

3. Das Wasserbehandlungssystem gemäß Anspruch 2, wobei zumindest eine Pulssequenz (83, 84, 85) eine Vielzahl von Pulsperioden (50, 50a, 50b, 55a, 55b, 55c, 56a, 56b, 56c) umfasst.

4. Das Wasserbehandlungssystem gemäß Anspruch 2 oder 3, wobei die zumindest eine Pulssequenz (83, 84, 85) zumindest eine Pulsperiode (50, 55a, 55b, 55c, 56a, 56b, 56c) umfasst, bei welcher die Dauer des ersten Pulses kürzer als die Dauer des zweiten Pulses ist.

5. Das Wasserbehandlungssystem gemäß einem der Ansprüche 2 bis 4, wobei die Pulssequenz (83, 84, 85) eine Fade-In-Subsequenz (60, 61) umfasst, die eine erste Pulsperiode (55a) und eine anschließende zweite Pulsperiode (55b) umfasst, wobei die Dauer des ersten Pulses der ersten Pulsperiode (55a) kürzer als die Dauer des ersten Pulses der zweiten Pulsperiode (55b) ist.

6. Das Wasserbehandlungssystem gemäß einem der Ansprüche 2 bis 5, wobei die Pulssequenz (83, 84, 85) zumindest eine Pulsperiode (50b) umfasst, bei welcher die Dauer des ersten Pulses länger als die Dauer des zweiten Pulses ist.

7. Das Wasserbehandlungssystem gemäß einem der Ansprüche 2 bis 6, wobei die Pulssequenz (83, 84, 85) eine Fade-Out-Subsequenz (64) umfasst, die eine erste Pulsperiode (56a) und eine anschließende zweite Pulsperiode (56b) umfasst, wobei die Dauer des ersten Pulses der ersten Pulsperiode (56a) länger ist als die Dauer des ersten Pulses der zweiten Pulsperiode (56b).

8. Das Wasserbehandlungssystem gemäß einem der Ansprüche 2 bis 7, wobei die Pulssequenz (83, 84, 85) zumindest eine Pulsperiode (50) umfasst, bei welcher die Dauer des ersten Pulses gleich der Dauer des zweiten Pulses ist.

9. Das Wasserbehandlungssystem gemäß einem der Ansprüche 2 bis 8, wobei die Pulssequenz (83, 84, 85) eine Subsequenz (62) umfasst, die eine Pulsperiode (50) umfasst, die zumindest zweimal wiederholt wird.

10. Das Wasserbehandlungssystem gemäß einem der vorhergehenden Ansprüche, wobei die erste Wassertemperatur (23) niedriger als die zweite Wassertemperatur (25) ist.

11. Das Wasserbehandlungssystem gemäß Anspruch 10, wobei die Sanitärarmatur (12) einen Kaltwassereinlass (16) und einen Warmwassereinlass (18) umfasst, die mit einem Mischventil (22) gekoppelt sind, wobei das Mischventil (22) einen Mischventilauslass umfasst, wobei die erste Wasserzufuhrleitung eine Kaltwasser-Bypass-Leitung (17) ist, die mit dem Kaltwassereinlass (16) gekoppelt ist, und das erste Diskretventil ein Kaltwasserventil (30) ist, und wobei die zweite Wasserzufuhrleitung eine Mischwasserleitung (26) ist, die mit dem Mischventilausgang gekoppelt ist, und das zweite Diskretventil ein Mischwasserventil (32) ist.

12. Das Wasserbehandlungssystem gemäß Anspruch 9 oder 10, wobei die Sanitärarmatur (12) zumindest eine Umlenkung (24) mit zumindest zwei Auslässen umfasst, wobei der Einlass der Umlenkung (24) mit dem Auslass des Mischventils (22) verbunden ist.

13. Das Wasserbehandlungssystem gemäß Anspruch 11, wobei die Umlenkung (24) das Steuern der Richtung des Wassers zwischen dem Behandlungsauslass (20) und/oder einem zweiten Auslass (28) erlaubt.

## Revendications

1. Système de traitement de l'eau (10) destiné à réguler une température d'eau au cours d'un traitement d'hydrothérapie, où le système de traitement de l'eau (10) comprend
a) une robinetterie sanitaire (12) comprenant
- une sortie de traitement (20),
- une première ligne d'alimentation en eau (17)
- incluant une première vanne distincte actionnée de manière électronique (30) et
- fournissant de l'eau à une première température d'eau (23) à la sortie de traitement (20),
- une deuxième ligne d'alimentation en eau (26)
- incluant une deuxième vanne distincte actionnée de manière électronique (32) et
- fournissant de l'eau à une deuxième température d'eau (25) à la même sortie de traitement (20), et
b) un élément de commande (14) couplé aux première et deuxième vannes distinctes (30, 32) de la robinetterie sanitaire (12),
où
c) l'élément de commande (14) est configuré pour modifier la température d'eau (RWT) à la sortie de traitement (20) vers au moins une température intermédiaire comprise entre les première et deuxième températures d'eau (23, 25),
**caractérisé en ce que** l'élément de commande (14) est en outre configuré pour modifier la température d'eau (RWT)
d) en commutant par impulsions la première vanne distincte (30) et/ou la deuxième vanne distincte (32) vers un état totalement ouvert ou totalement fermé sans les ouvertures intermédiaires rencontrées avec les vannes proportionnelles
e) en faisant varier les durées d'impulsion, et
f) en prenant en compte un temps de latence donné pour le changement de température au niveau de la sortie de traitement (20).

2. Système de traitement de l'eau selon la revendication précédente, dans lequel l'élément de commande est configuré pour modifier la température d'eau à la sortie de traitement (20) selon au moins une séquence d'impulsions (83, 84, 85), où la séquence d'impulsions (83, 84, 85) comprend une ou plusieurs périodes d'impulsion (50, 50a, 50b, 55a, 55b, 55c, 56a, 56b, 56c), comprenant une première impulsion d'une première durée associée à la première température d'eau (23) et une deuxième impulsion d'une deuxième durée associée à la deuxième température d'eau (25).

3. Système de traitement de l'eau selon la revendication 2, dans lequel au moins une séquence d'impulsions (83, 84, 85) comprend une pluralité de périodes d'impulsion (50, 50a, 50b, 55a, 55b, 55c, 56a, 56b, 56c).

4. Système de traitement de l'eau selon la revendication 2 ou 3, dans lequel la au moins une séquence d'impulsions (83, 84, 85) comprend au moins une période d'impulsion (50a, 55a, 55b, 55c, 56a, 56b, 56c), où la durée de la première impulsion est plus courte que la durée de la deuxième impulsion.

5. Système de traitement de l'eau selon l'une quelconque des revendications 2 à 4, dans lequel la séquence d'impulsions (83, 84, 85) comprend une sous-séquence de modification progressive (60, 61) comprenant une première période d'impulsion (55a) et une deuxième période d'impulsion ultérieure (55b), où la durée de la première impulsion de la première période d'impulsion (55a) est plus courte que la durée de la première impulsion de la deuxième période d'impulsion (55b).

6. Système de traitement de l'eau selon l'une quelconque des revendications 2 à 5, dans lequel la séquence d'impulsions (83, 84, 85) comprend au moins une période d'impulsion (50b), où la durée de la première impulsion est plus longue que la durée de la deuxième impulsion.

7. Système de traitement de l'eau selon l'une quelconque des revendications 2 à 6, dans lequel la séquence d'impulsions (83, 84, 85) comprend une sous-séquence de modification progressive (64) comprenant une première période d'impulsion (56a) et une deuxième période d'impulsion ultérieure (56b), où la durée de la première impulsion de la première période d'impulsion (56a) est plus longue que la durée de la première impulsion de la deuxième période d'impulsion (56b).

8. Système de traitement de l'eau selon l'une quelconque des revendications 2 à 7, dans lequel la séquence d'impulsions (83, 84, 85) comprend au moins une période d'impulsion (50), où la durée de la première impulsion est égale à la durée de la deuxième impulsion.

9. Système de traitement de l'eau selon l'une quelconque des revendications 2 à 8, dans lequel la séquence d'impulsions (83, 84, 85) comprend une sous-séquence (62) comprenant une période d'impulsion (50) qui est répétée au moins deux fois.

10. Système de traitement de l'eau selon l'une quelconque des revendications précédentes, dans lequel la première température d'eau (23) est inférieure à la deuxième température d'eau (25).

11. Système de traitement de l'eau selon la revendication 10, dans lequel la robinetterie sanitaire (12) comprend une entrée d'eau froide (16) et une entrée d'eau chaude (18) couplées à un mitigeur (22) présentant une sortie de mitigeur, où la première ligne d'alimentation en eau est une ligne de dérivation d'eau froide (17) couplée à l'entrée d'eau froide (16) et la première vanne distincte est une vanne d'eau froide (30), et où la deuxième ligne d'alimentation en eau est une ligne d'eau mélangée (26) couplée à la sortie de mitigeur et la deuxième vanne distincte est une vanne d'eau mélangée (32).

12. Système de traitement de l'eau selon la revendication 9 ou 10, dans lequel la robinetterie sanitaire (12) comprend au moins un inverseur (24) avec au moins deux sorties, où l'entrée de l'inverseur (24) est reliée à la sortie du mitigeur (22).

13. Système de traitement de l'eau selon la revendication 11, dans lequel l'inverseur (24) permet de commander la direction de l'eau entre la sortie de traitement (20) et/ou une deuxième sortie (28).
